# EUROPÄISCHE PATENTSCHRIFT

(11) **EP 1 314 166 B1**
(45) Veröffentlichungstag und Bekanntmachung des Hinweises auf die Patenterteilung: **07.09.2005**
(21) Anmeldenummer: 01971973.1
(22) Anmeldetag: 28.08.2001
(51) Int. Cl.: G21C 19/317

(54) **REKOMBINATOR MIT STABILISIERTER REAKTIONSTEMPERATUR**
RECOMBINER WITH A REGULATED REACTION TEMPERATURE
RECOMBINEUR A TEMPERATURE DE REACTION STABILISEE

(30) Priorität: 29.08.2000 DE 10042250
(43) Veröffentlichungstag der Anmeldung: 28.05.2003
(73) Patentinhaber: FORSCHUNGSZENTRUM JÜLICH GMBH, 52425 Jülich (DE); Bröckerhoff, Peter, 52428 Jülich (DE); Von Lensa, Werner, 52379 Langerwehe (DE); Reinecke, Ernst-Arndt, 52062 Aachen (DE)
(72) Erfinder: BRÖCKERHOFF, Peter, 52428 Jülich (DE); VON LENSA, Werner, 52379 Langerwehe (DE); REINECKE, Ernst-Arndt, 52062 Aachen (DE)
(74) Vertreter: Rox, Thomas
(86) Internationale Anmeldenummer: PCT/EP2001/009905
(87) Internationale Veröffentlichungsnummer: WO 2002/019344

(56) Entgegenhaltungen:
- DE-A- 19 801 618
- US-A- 6 071 482
- PATENT ABSTRACTS OF JAPAN vol. 1997, no. 08, 29. August 1997 (1997-08-29) & JP 09 090092 A (HITACHI LTD ET AL.)

## Beschreibung

Die Erfindung betrifft eine Vorrichtung zum Rekombinieren von Wasserstoff mit mindestens einem Katalysatorelement, mit mindestens einem ein Arbeitsmittel führenden und mit dem Katalysatorelement wärmeleitend verbundenen Wärmerohr und mit einem mit dem Wärmerohr verbundenen Kühler zum Kühlen des Arbeitsmittels.

Wasserstoff oder andere zündfähige Gase können sowohl im Normalbetrieb, z. B. Ladung von Akkumulatoren großer Leistung zur Stromspeicherung, als auch störfallbedingt infolge von Leckagen aus Vorratsbehältern, bei Kernschmelzunfällen von Kernreaktoren usw. freigesetzt werden und je nach Wasserstoffkonzentration per Deflagration oder Detonation exotherm mit dem Luftsauerstoff reagieren. Dieser Gefahr kann mit dem Einsatz katalytisch wirksamer Rekombinatoren begegnet werden, solange sie nicht infolge der Energiefreisetzung wegen Überhitzung selbst zur Zündquelle werden und damit eine Explosion auslösen. Die folgenden Betrachtungen werden exemplarisch für eine kerntechnische Anwendung diskutiert. Sinngemäß können sie aber auch auf andere Wasserstoff-Anwendungen übertragen werden, z. B. bei Leckagen wasserstoffbetriebener Fahrzeuge in Garagen oder Parkhäusern.

Im Verlauf schwerer Störfälle entstehen in wassergekühlten Kernreaktoren (LWR) infolge der Reduktion von Wasserdampf mit den metallischen Brennelement-Hüllrohren aus Zirkonium-Legierungen große Mengen Wasserstoff, die in die Sicherheitsbehälter gelangen. Die maximalen Wasserstoffmengen können sowohl bei Druck- als auch Siedewasserreaktoren etwa 20.000 mₙ³ betragen. Aufgrund des sich in den Sicherheitsbehältern (Containments) befindenden Luftsauerstoffs besteht die Gefahr der Bildung zündfähiger Gemische, deren unkontrollierte Entzündung mit anschließender Explosion eine schwere dynamische Druckbeanspruchung der Containmentwände bewirkt. Wasserdampf und Wasserstoff führen darüber hinaus auch zu kontinuierlichen Druck- und Temperaturerhöhungen der Störfallatmosphäre. Infolge des Überdrucks sind sie als treibende Kraft für Leckagen aus dem Sicherheitsbehälter mit der Gefahr des Austritts radiotoxischer Substanzen anzusehen.

Vorbeugende Sicherheitsvorkehrungen bestehen z. B. in der Inertisierung der Gasvolumina mit Stickstoff, wie sie im Fall der Siedewasserreaktoren (SWR) geplant oder auch schon vorgenommen ist. Diskutierte und zum Teil bereits realisierte Gegenmaßnahmen für Druckwasser-Reaktoren (DWR) stellen katalytische Rekombinatoren dar. Mit deren Hilfe wird der entstandene Wasserstoff sowohl innerhalb als auch außerhalb der Zündgrenzen exotherm katalytisch rekombiniert, d. h. unter Entstehung erheblicher Wärmemengen in Wasserdampf umgesetzt. Dabei ist eine Überhitzung dieser meist ungekühlten Apparate zur Vermeidung unkontrollierter Zündungen und damit verbundener Anlagen- und Umgebungsgefährung zu vermeiden.

Zur Beseitigung des im Normalbetrieb und störfallbedingt entstehenden Wasserstoffs wurden sowohl thermische als auch katalytische Rekombinatoren entwickelt, die den Wasserstoff mit dem Sauerstoff der Luft exotherm in Wasserdampf rekombinieren. Bevorzugt werden katalytische Systeme, die passiv, d. h. selbststartend und ohne externe Energieversorgung, arbeiten, damit die Verfügbarkeit während eines Störfalls gewährleistet ist. Zur Zeit gibt es zwei Rekombinatortypen, die in umfangreichen Tests ihre Brauchbarkeit unter Beweis gestellt haben, u. a. auch hinsichtlich möglicher Katalysatorgifte. Beide Konzepte sowie Messungen und Meßergebnisse sind in der Literatur ausführlich beschrieben. Als Substrate werden sowohl metallische Platten oder Folien als auch hochporöses Granulat verwendet, auf die Platin bzw. Palladium als Katalysator aufgebracht ist. Mehrere Folien und Granulatpakete - das Granulat wird von Drahtnetzen zu Paketen zusammengehalten - sind vertikal und parallel zueinander in Blechgehäusen angeordnet. Das Wasserstoff/Luftgemisch tritt an der Unterseite in die Gehäuse ein. An den katalytisch beschichteten Oberflächen kommt es zur Reaktion. Das Gemisch bzw. die Reaktionsprodukte überströmen die Oberflächen infolge des entstehenden thermischen Auftriebs. Ein Gebläse ist also nicht erforderlich. Nach Auskunft der Reaktorindustrie gilt es als gesichert, daß mit einer Anzahl von 40 bis 100 katalytischer Rekombinatoren dem Wasserstoffproblem begegnet werden kann. Sie werden im Sicherheitsbehälter so angeordnet, daß ihre Wärmeabgabe möglichst in derselben Richtung erfolgt wie die beim großen Unfall auftretenden großräumigen Konvektionsbewegungen.

Als Nachteil gilt die Tatsache, daß vor Eintritt in die Rekombinatoren weder eine gezielte Vormischung noch Kühlung der Atmosphäre möglich ist. Die Reaktionspartner Sauerstoff und Wasserstoff werden den Rekombinatoren so zugeführt, wie sie entstehen bzw. örtlich vorliegen. Damit sind kurzfristige oder andauernde Überhitzungen nicht auszuschließen. Die maximalen Abbauraten bzw. thermischen Leistungen bestehender Systeme sind aufgrund der Überströmung der Oberflächen, des damit verbundenen geringen Queraustauschs und der geringen Stoff- und Wärmeübergangskoeffizienten begrenzt. Außerdem ist die Möglichkeit zur Wärmespeicherung gering.

Trotz der großen freien Oberfläche des Rekombinators, der poröses Granulat als Substrat verwendet, ist die Wirksamkeit deutlich geringer als die des anderen entwickelten Systems, für das Platten oder Folien benutzt werden. Das Brenngas/Luftgemisch erreicht bei der Überströmung der beschichteten Substrate nicht alle katalytischen Zentren, da die Reaktion lediglich an den Paketoberflächen stattfindet und damit die Temperaturverhältnisse unübersichtlich bleiben. In beiden Systemen ist die Reaktion unvollständig.

Die Abfuhr der Reaktionswärme aus den Systemen ist wegen fehlender Kühleinrichtungen grundsätzlich problematisch. Sie erfolgt fast ausschließlich infolge Konvektion von den festen Oberflächen an die vorbeiströmenden Gase sowie Wärmestrahlung an benachbarte Strukturen. Zu hohe Wasserstoffkonzentrationen können zu einer kurzzeitigen oder permanenten Überhitzung der beschichteten Substrate führen, so daß die Zündtemperatur erreicht oder überschritten wird und es infolgedessen zu homogenen Gasphasenreaktionen mit Deflagration bzw. Detonation kommen kann. Als weiterer Nachteil ist die zusätzliche Aufheizung der Umgebung und des Containments mit entsprechendem Druckaufbau anzusehen.

Wie sich gezeigt hat, ist die Reaktion innerhalb der Rekombinatoren diffusions- und nicht, wie häufig noch angenommen, oberflächenkontrolliert. Das bedeutet, daß der Antransport der Reaktanden an die katalytisch wirkenden Oberflächen sowie der Abtransport der Reaktionsprodukte von den Oberflächen von entscheidender Bedeutung für die Geschwindigkeit des Rekombinationsprozesses sind. Dies läßt den Schluß zu, daß die Auslegung eines Rekombinators zunächst im Hinblick auf die Optimierung der Transportvorgänge, dann aber auch auf die Optimierung der Gehäuse und der Wärmeabfuhr vorzunehmen ist.

Das technische Problem besteht also darin, sowohl kleine als auch große Wasserstoffmengen mit dem in den Sicherheitsbehältern vorhandenen Luftsauerstoff in einem weiten Konzentrationsbereich kontrolliert umzusetzen und die dabei entstehende Reaktionswärme soweit abzuführen, daß im vorliegenden Gemisch die jeweilige Zündtemperatur nicht erreicht wird.

Darüber hinaus sollen die katalytisch wirksamen Flächen aber auch nicht soweit abgekühlt werden, daß die katalytische Reaktion nicht anläuft oder es sogar zur Kondensation von Wasserdampf mit übermäßiger Durchfeuchtung der katalytischen Substrate kommt. Außerdem müssen die Reaktionstemperaturen so hoch sein, daß eine Naturkonvektion zum An- und Abtransport der Reaktionspartner in Gang gesetzt wird und erhalten bleibt. Die Vorrichtung sollte darüber hinaus in der Lage sein, auch bei zwangsdurchströmten Rekombinatoren mit erhöhtem Stofftransport und folglich höherer Wasserstoffabbauleistung einen Betrieb ohne Überschreitung der Zündtemperatur zu ermöglichen. Aus Sicherheits- und Verfügbarkeitsgründen sollte die Vorrichtung schließlich nicht von externer Energieversorgung abhängig sein und den Prinzipien passiver Sicherheitssysteme genügen.

Das zuvor aufgezeigte technische Problem wird erfindungsgemäß durch eine Vorrichtung nach Anspruch 1 dadurch gelöst, daß ein erster Abschnitt des Wärmerohrs mit flüssigem Kühlmittel gefüllt ist, daß der erste Abschnitt mit dem Katalysatorelement verbunden ist, daß ein zweiter Abschnitt des Wärmerohrs mit einem dampfförmiges Arbeitsmittel aufweisenden Dampfpolster gefüllt ist und daß der Kühler im zweiten Abschnitt angeordnet ist.

Erfindungsgemäß wird die Arbeitstemperatur des Wärmerohres mit Wahl des Arbeitsmittels und des Arbeitsdrucks so gewählt, daß einerseits die Umgebungstemperatur eine schnelle Vorwärmung des Katalysators bis auf geeignete Starttemperaturen ermöglicht, andererseits aber ein Überschreiten der Zündtemperaturen ausgeschlossen werden kann. Denn während das Arbeitsmittel noch nicht seine vom Arbeitsdruck abhängige Verdampfungstemperatur erreicht hat, findet über das Gaspolster nur ein geringer Wärmeaustausch statt, so daß die Temperatur an den Katalysatorelementen schnell auf die Betriebstemperatur ansteigt. Liegt dagegen die Temperatur des flüssigen Arbeitsmittels im Bereich der Siedetemperatur, so tritt ein erhöhtes Verdampfen bei im wesentlichen gleichbleibender Temperatur des Arbeitsmittels bei dem vorgegebenen Arbeitsdruck auf. Eine effektive Kühlung der Katalysatorelemente bei der Betriebstemperatur ist somit die Folge.

Die Erfindung beschreibt demnach eine Vorrichtung zur Beseitigung betriebs- oder störfallbedingt freigesetzten Wasserstoffs aus nichtinertisierten Räumen. Dabei wird die Gefahr der Überhitzung des Katalysators mit der Folge der Zündung des Gasgemischs vermieden. Auch eine zu starke Kühlung gerade während des Aufwärmens auf die Betriebstemperatur kann weitgehend vermieden werden. Diese würde zu zu geringen Reaktionsleistungen führen. Innerhalb der Vorrichtung wird der Wasserstoff in Anwesenheit des vorhandenen Luftsauerstoffs mittels katalytischer Verfahren zu Wasserdampf rekombiniert. Zur Vermeidung von Entzündungen und zusätzlicher Aufheizung der umgebenden Atmosphäre wird die Reaktionswärme an das Arbeitsmittel eines Wärmerohres abgeführt. Dadurch und durch geeignete Formgebung des Katalysators wird seine maximale Temperatur begrenzt und stabilisiert. Die mit Wärmerohren versehenen katalytischen Einrichtungen können sowohl in Rekombinator-Einheiten mit natürlicher Konvektion als auch in Turbo-Kompressor-Einheiten mit Zwangskonvektion vorteilhaft eingesetzt werden.

Weitere Einzelheiten und Vorteile der erfindungsgemäßen Vorrichtung sind Gegenstand der Unteransprüche 2 bis 9 sowie der nachfolgenden Beschreibeung von Ausführungsbeispielen, wobei auf die beigefügte Zeichnung Bezug genommen wird. In der Zeichnung zeigen
- Fig. 1: einen Reaktorbehälter mit einer Vorrichtung gemäß des Standes der Technik in der linken Hälfte und einer erfindungsgemäßen Vorrichtung in der rechten Hälfte in einer schematischen Ansicht,
- Fig. 2: eine erfindungsgemäße Vorrichtung in einer schematischen Darstellung,
- Fig. 3: eine erste Ausführungsform einer katalytisch beschichteten Platte der erfindungsgemäßen Vorrichtung,
- Fig. 4: eine zweite Ausführungsform einer katalytisch beschichteten Platte der erfindungsgemäßen Vorrichtung und
- Fig. 5: eine Anordnung einer erfindungsgemäßen Vorrichtung in einem Gehäuse mit weiteren Komponenten der Gasgemischkühlung.

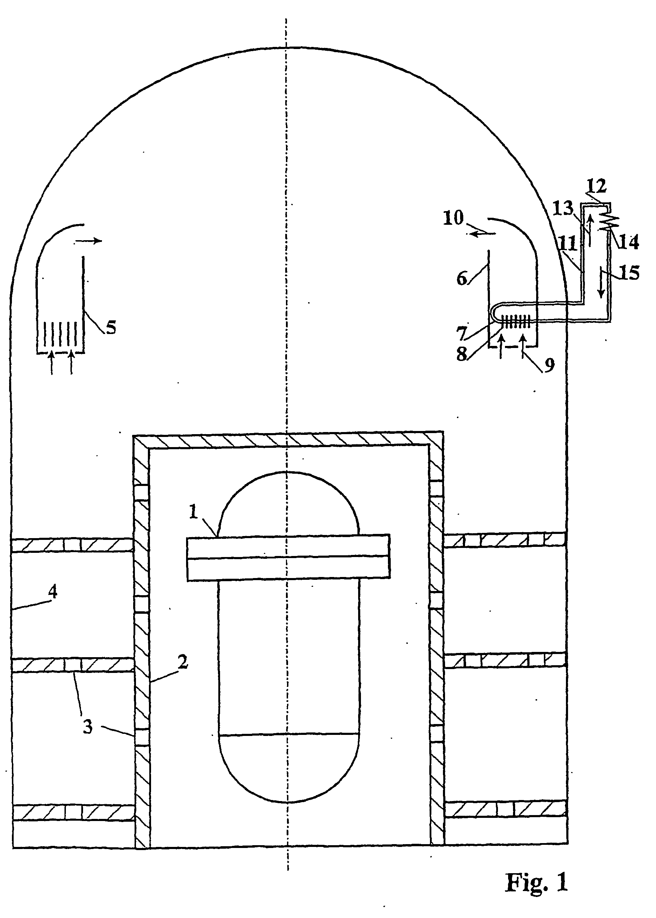

Zur Verdeutlichung der Lösung der Aufgabe diene Fig. 1. Sie stellt schematisch einen Sicherheitsbehälter einer Reaktoranlage samt einiger anderer Komponenten dar. Im Reaktordruckbehälter 1 entsteht nach einem Störfall aus der Reaktion des Wasserdampfs mit den Brennelementhüllen Wasserstoff. Das aus Dampf, Luft, Wasserstoff und Aerosolen bestehende Gemisch gelangt zunächst in die Sicherheitszelle 2 und von dort über vorhandene Durchbrüche 3 in den Sicherheitsbehälter oder in das Containment 4. Dort steigt es aufgrund der Dichteunterschiede wegen der hohen Temperatur des Gemischs und der geringen Dichte des Wasserstoffs nach oben, wo es sich gegebenenfalls auch per Stratifikation unerwünscht anreichern kann. Infolge der Wärmeabgabe an den kühleren Außenwänden des Containments kommt es aufgrund höherer Dichte zu einer Abwärtsbewegung.

In der linken Hälfte der Fig. 1 ist ebenfalls schematisch eine Rekombinationsvorrichtung 5 in Platten- oder Folienbauart dargestellt. Die beidseitig mit Katalysatormaterial beschichteten Bleche oder Folien sind parallel zueinander stehend in einem Metallgehäuse angeordnet. An den beschichteten Oberflächen reagiert der Wasserstoff mit dem Sauerstoff. Es entstehen Dampf und Wärme. Die entstehende Reaktionswärme sorgt für einen Auftrieb der Gase zwischen den Substraten. Dieser wird verstärkt durch die Form des Gehäuses. Zusatzkomponenten, wie z. B. Kühler oder Gebläse, fehlen. Bei Überspeisung der Substrate mit wasserstoffreichem Gas ist eine Entzündung des Gemischs an den katalytisch wirkenden Oberflächen nicht auszuschließen.

In der rechten Seite der Fig. 1 ist ein Ausführungsbeispiel einer erfindungsgemäßen Vorrichtung dargestellt. Sie weist ebenfalls ein Gehäuse 6 auf; dieses ist jedoch für die Realisierung der Erfindung nicht erforderlich und somit optional. In ihm sind Wärmerohre 7 und zur Vergrößerung der Oberfläche Rippen, hier mit Katalysatormaterial beschichtete Platten 8 wie in bekannten Rekombinatoren, angeordnet. Das wasserstoffreiche Gemisch (Pfeile 9) tritt unten in die Vorrichtung ein; es verläßt die Vorrichtung abgereichert oben (Pfeil 10).

Die an den Substraten entstehende Reaktionswärme wird zum überwiegenden Teil infolge Wärmeleitung in das Arbeitsmittel 11 des in vereinfachter Ausführungsform dargestellten Wärmerohres 7 (heat pipe) abgeleitet. Der geringere Teil wird sowohl mittels Konvektion an das an den Platten oder Folien 8 vorbeiströmende Gas als auch infolge Wärmestrahlung an benachbarte Platten bzw. Folien 8 oder die Gehäusewand 6 abgegeben. Die Substrate sind in dem Beispiel als Rippen anzusehen, die höhere Wärme- und Stoffübergangskoeffizienten bewirken und daher zu einer besseren Wärmeübertragung (Kühlung) beitragen.

Das Arbeitsmittel 11 verdampft ab einer bestimmten Temperatur, die sich aus der Dampfdruckkurve in Abhängigkeit vom Arbeitsmittel 11 und vom voreingestellten Arbeitsdruck ergibt. Die aufgenommene Wärme wird per Dampf über das oberhalb liegende Gaspolster 12 im Aufwärtsstrom (Pfeil 13) an den Kühler 14 übertragen. Das Arbeitsmittel kondensiert und fließt wieder zurück (Pfeil 15). Alternativ dazu gibt es auch Wärmerohre, die das Arbeitsmittel (passiv) aufgrund anderer physikalischer Prozesse, z. B. Kapillarkräfte, wieder zum Verdampfer zurückführen.

Die Eigenart derartiger Wärmerohre 7, nämlich bis zum Einsetzen der Verdampfung nur sehr wenig Wärme zu transportieren, führt - im Gegensatz zu einer permanenten Kühlung - zu einem zügigen Aufheizen der katalytischen Substrate auf den Platten oder Folien 8. Dadurch wird das Startverhalten der Rekombinationsreaktion verbessert. Danach setzt ein hocheffektiver Wärmetransport bei einer definierten Temperatur ein, der eine weitere Überhitzung sicher ausschließt.

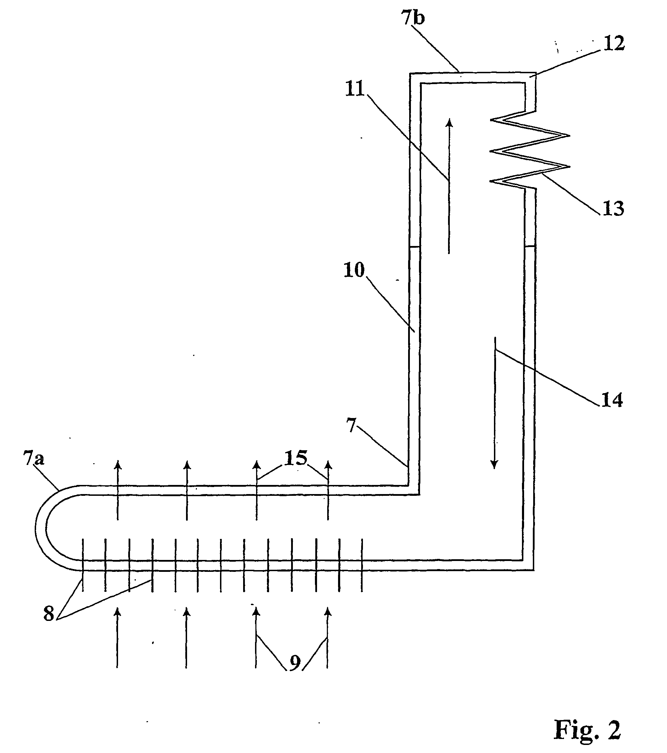

In Fig. 2 ist das Wärmerohr 7 zusammen mit den katalytisch wirkenden Substraten auf den Platten oder Folien 8, die wie in herkömmlicher Rekombinatoren angeordnet sind, vergrößert dargestellt. Größe, Form und Abstand der Platten oder Folien 8 voneinander sind dabei so zu wählen, daß der Wasserstoffumsatz möglichst hoch ist.

Die Wahl des für den jeweiligen Einsatzzweck am besten geeigneten Arbeitsmittels 11 gestattet an den Substraten die Einstellung von Reaktionstemperaturen, die stets unterhalb der Zündtemperatur liegen. Bei Verwendung von z. B. Wasser als Arbeitsmittel und bei einem Arbeitsdruck des darüber liegenden Gaspolsters 12 von 1 bar wird die Temperatur an den Substraten 8 entsprechend der Dampfdruckkurve nur unwesentlich oberhalb der Verdampfungstemperatur von 100 °C liegen. Eine Erhöhung oder eine Absenkung des Arbeitsdrucks gestattet entsprechend höhere oder niedrigere Reaktionstemperaturen. Zu geringe Temperaturen an den Platten oder Folien 8 würden allerdings den Auftrieb mindern und somit den Antransport der Reaktionspartner an die mit Katalysatormaterial belegten Platten 8 oder den Abtransport von den Platten 8 aufgrund zu geringer Geschwindigkeiten und damit Stoffübergangskoeffizienten verringern und damit auch die Wasserstoffumsätze. Daher kommt der Auswahl der Arbeitsmittel und des Drucks der Gasatmosphäre - im allgemeinen Luft oder zur Vermeidung von Korrosion Stickstoff - besondere Bedeutung zu. Wärmeöle oder flüssige Metalle z. B. würden höhere Reaktionstemperaturen an den Substraten 8 zur Folge haben und somit den Auftrieb verbessern. Das heiße, an den Substraten 8 abgereicherte Gas (Pfeil 16) wird die Vorrichtung im allgemeinen entgegen der Erdschwere verlassen.

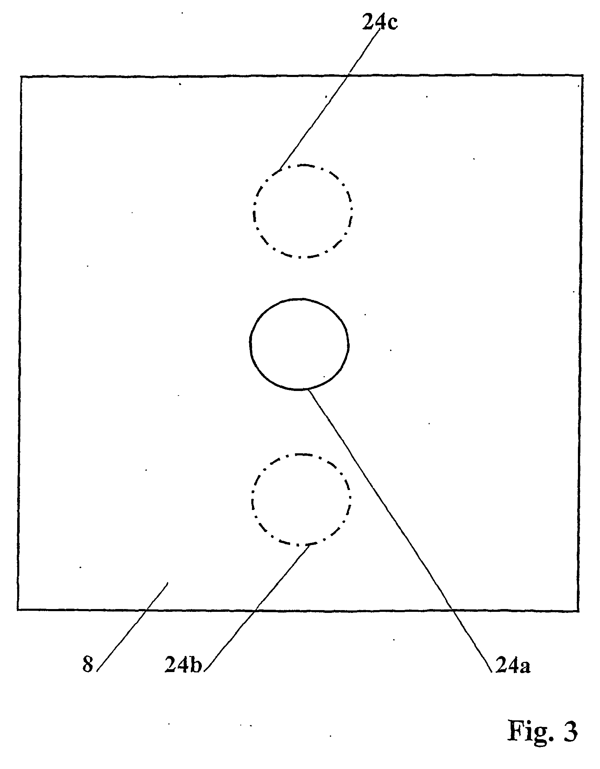

Fig. 3 zeigt ein einfaches Ausführungsbeispiel einer mit Edelmetall beschichteten quadratischen Platte 8, wie sie für herkömmliche Rekombinatoren verwandt wird. Andere Formen, z. B. Rechtecke, Mehrecke, Kreise, Ellipsen usw., sind möglich. Die Aussparungen 24a bzw. 24b und 24c für die Rohre des Wärmerohres 7 sind zentral oder außermittig angeordnet. Außermittige Anordnungen gestatten den Bedingungen angepaßte Plattengeometrien sowie Beschichtungen und folglich eine Optimierung der Wärmeabfuhr. Die Platten oder Folien können auch in Strömungsrichtung so verlängert werden, daß zwei oder mehr Durchbrüche zur Aufnahme der vorstehend besprochenen Wärmerohre (Hin- und Rückleitungen) möglich sind.

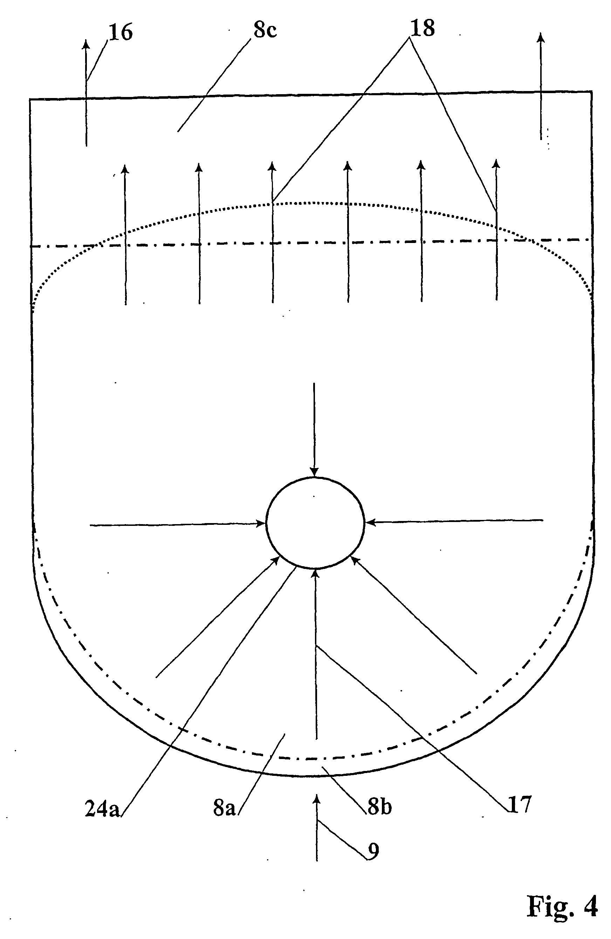

Ein Ausführungsbeispiel für ein katalytisch beschichtete Platte 8 ist in Fig. 4 dargestellt. Im Beispiel wird eine Anströmung der Platte 8 von unten nach oben angenommen (Pfeil 9). Die Platte oder Folie 8 weist eine Öffnung 24a für das Rohr 7 auf und kann beidseitig oder nur einseitig beschichtet werden, wobei die Beschichtung mit 8a gekennzeichnet ist. Der vordere Bereich 8b der Platte 8 kann auch unbeschichtet bleiben. Denn es kommt bei der Anströmung einer Platte 8 an der Eintrittskante aufgrund der nicht vorhandenen oder dünnen Grenzschicht zu hohen Stoffübertragungskoeffizienten, die bei entsprechenden Gaszusammensetzungen auch zu Entzündungen des Gemischs führen können.

Grundsätzlich kann aber die Kontur der angeströmten Seite in bezug auf das Kühlrohr 7 so angepaßt werden, daß die Wärmeleitwege anströmseitig so kurz sind; daß eine Überhitzung ausgeschlossen ist. Auf diese Weise soll sichergestellt werden, daß der überwiegende Teil der dort entstandenen Reaktionswärme (Pfeile 17) auch mittels Wärmeleitung durch die Platten oder Folien 8 in das Arbeitsmittel geleitet wird. Ecken, aus denen die Wärme nur schlecht oder unvollständig abgeleitet werden kann, werden somit vermieden. Auf der Abströmseite 8c ist die Reaktion dagegen wegen der bereits erfolgten Abreicherung des Wasserstoffs geringer. Die Kühlfahnen können folglich auf der Abströmseite länger ausfallen. Wegen der partiellen Beschichtung auf der Abströmseite 8c kann das Ende der Platte 8 auch nur zur Kühlung der austretenden Gase dienen.

Die Rippen- oder Substratdicken sind den Erfordernissen anzupassen. Zu dünne Folien weisen wegen zu geringer Wandstärke nur eine geringe Speicherfähigkeit auf. Mit einer geeigneten Substratdicke und der rechten Wahl der Wärmeleitfähigkeit des Materials läßt sich eine Zündung sicher vermeiden. Die erwähnten Teilbeschichtungen stellen einen zusätzlichen Auslegungsparameter dar.

Die katalytischen Substrate und die Wahl des Arbeitsmittels können so gewählt werden, daß der Auftrieb den Antransport der Störfallatmosphäre sicherstellt und der Anteil der Reaktionswärme, der nicht in das Arbeitsmittel geleitet wird 18, möglichst gering ist. Das abgereicherte heiße Gemisch (Pfeil 16) verläßt die Platte oder Folie 8 oben.

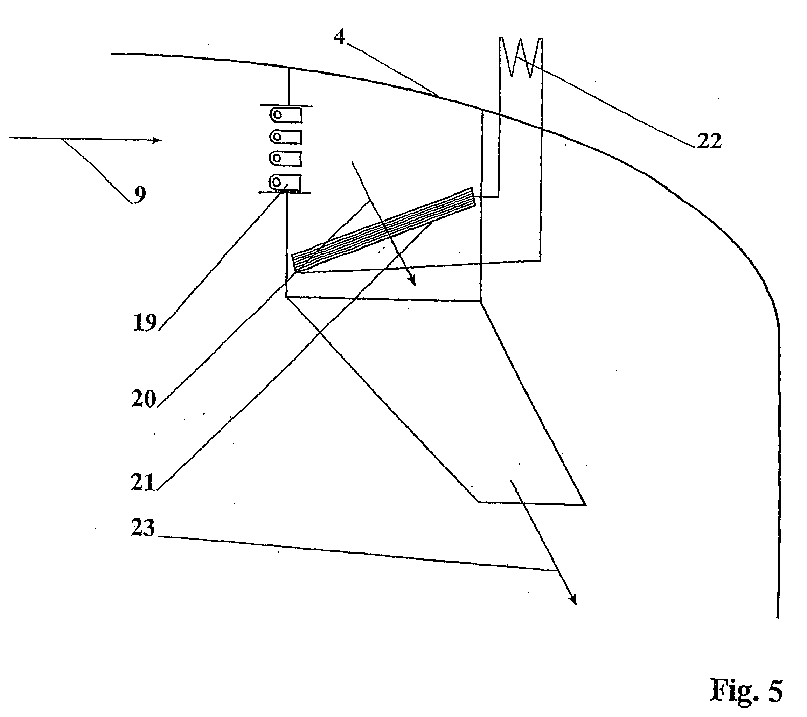

In Fig. 5 ist beispielhaft eine Anordnung der zuvor beschriebenen Vorrichtung in einem Sicherheitsbehälter 4 dargestellt. Die Vorrichtung 19 wird mit der wasserstoffreichen Containmentatmosphäre (Pfeil 9) angeströmt und dort angeordnet, wo es auch zu Stratifikationen und Anreicherung von Wasserstoff kommen kann. In der Vorrichtung wird ein Teil des Wasserstoffs auf die beschriebene Weise so abgebaut, daß es an keiner Stelle zu einer Entzündung kommen kann. Das abgereicherte Gemisch (Pfeil 20) strömt dann über die Rohre eines Gebäudekühlers 21, in dem ein Teil der während des Störfalls entstandenen Wärme und die noch vorhandene Reaktionswärme an ein Kühlmittel, z. B. Wasser, abgegeben wird. Diese Wärme wird an höher gelegene Wasserbecken 22 außerhalb des Sicherheitsbehälters, z.B. ebenfalls nach dem Wärmerohrprinzip, übertragen. Infolge der Wärmeabgabe an den Rohren des Kühlers 21 kommt es zu einer Erhöhung der Dichte der Atmosphäre in der Vorrichtung und damit zu einem Abtrieb, der zu einer größeren Strömungsgeschwindigkeit am Eintritt in die Vorrichtung und damit auch zu einem erhöhten Stoffübergang führt. Die Folge sind höhere Wasserstoffumsätze und eine bessere Kühlung der gesamten Störfallatmosphäre mit entsprechender Druckabsenkung. Das Gemisch verläßt die gesamte Einheit unten (Pfeil 23).

Auch für die erwähnten Rekombinatoren, welche poröse katalytische Strukturen benutzen, läßt sich das Grundprinzip anwenden, wenn die Granulate und die sie haltenden Netze z. B. zwischen gekühlte Platten eingebracht werden und der Abstand so gewählt wird, daß die katalytischen Substrate eine hinreichende Kühlung erfahren.

Die wesentlichen Eigenschaften und Funktionen der vorstehend beschriebenen katalytisch wirkenden Vorrichtung gemäß der vorliegenden Erfindung und ihren bevorzugten Ausgestaltungen lassen sich wie folgt zusammenfassen. Es handelt sich um eine Vorrichtung
a) in der mit Katalysatormaterial beschichtete Substrate (Platten oder Folien) oder mit zwischen Kühlplatten und Kühlrohren angeordneten porösen Katalysatorsubstraten, ähnlich wie die bestehender Rekombinatoren, als Grundkörper für den Abbau des Wasserstoffs dienen,
b) in der die Form der Platten oder Folien den Strömungs- und Kühlbedingungen angepaßt werden,
c) in der die Platten oder Folien zur Vergrößerung der Oberfläche und damit der Wärme- und Stoffübergangskoeffizienten als Rippen genutzt werden,
d) in der die Platten oder Folien zur Vermeidung von Entzündungen mit einem Wärmerohr gekoppelt werden,
e) in der die Platten oder Folien mittig oder außermittig in bezug auf das Wärmerohr angeordnet werden,
f) deren Platten oder Folien ganz oder teilweise beschichtet sind, damit ein möglichst großer Teil der Reaktionswärme infolge Feststoffleitung in das Arbeitsmittel geleitet wird und nicht in den Gemischstrom gelangt,
g) in der die Temperatur der Platten oder Folien und damit auch das Startverhalten der katalytischen Reaktion über die Wahl des Arbeitsmittels und des Arbeitsdrucks des darüberliegenden Gaspolsters einzustellen ist,
h) die vor oder hinter Gebäudekühlern zwecks Erhöhung der Strömungsgeschwindigkeit sowie Wärme- und Stoffübergangskoeffizienten angeordnet werden können,
i) die vorzugsweise mit selbststartenden passiven oder aber auch aktiv betriebenen Turboverdichtereinheiten zwecks Erhöhung der Strömungsgeschwindigkeit sowie Wärme- und Stoffübergangskoeffizienten gekoppelt werden können,
j) deren Betriebstemperatur alternativ zur Nutzung von Auf- oder Abtrieb auf hohem oder niedrigem Niveau festgelegt werden kann und
k) deren maximale Temperatur alternativ über Plattenwärmetauscher sekundärseitig mit Luft-, Gas- oder Flüssigkeitskühlung begrenzt wird.

## Patentansprüche

1. Vorrichtung zum Rekombinieren von Wasserstoff
- mit mindestens einem Katalysatorelement (8),
- mit mindestens einem ein Arbeitsmittel (11) führenden und mit dem Katalysatorelement (8) wärmeleitend verbundenen Wärmerohr (7) und
- mit einem mit dem Wärmerohr (7) verbundenen Kühler (14) zum Kühlen des Kühlmittels (11),
**dadurch gekennzeichnet,**
- **daß** ein erster Abschnitt (7a) des Wärmerohrs (7) mit flüssigem Kühlmittel (11) gefüllt ist,
- **daß** der erste Abschnitt (7a) mit dem Katalysatorelement (8) verbunden ist,
- **daß** ein zweiter Abschnitt (7b) des Wärmerohrs (7) mit einem dampfförmiges Arbeitsmittel (11) aufweisenden Dampfpolster (12) gefüllt ist und
- **daß** der Kühler (14) im zweiten Abschnitt (7b) angeordnet ist.

2. Vorrichtung nach Anspruch 1,
**dadurch gekennzeichnet,**
**daß** der Arbeitsdruck im zweiten Abschnitt (7b) einen vorgegebenen Wert aufweist.

3. Vorrichtung nach Anspruch 1 oder 2,
**dadurch gekennzeichnet,**
**daß** das Arbeitsmittel (11) Wasser, Wärmeöl oder Metall ist.

4. Vorrichtung nach einem der Ansprüche 1 bis 3,
**dadurch gekennzeichnet,**
**daß** das Wärmerohr (7) auf der Zulaufseite und der Rücklaufseite des ersten Abschnittes (7a) mit dem Katalysatorelement (8) verbunden ist.

5. Vorrichtung nach einem der Ansprüche 1 bis 4,
**dadurch gekennzeichnet,**
**daß** der Durchbruch (24a) im Katalysatorelement (8) für eine Verbindung mit dem Wärmerohr (7) zentral angeordnet ist.

6. Vorrichtung nach einem der Ansprüche 1 bis 4,
**dadurch gekennzeichnet,**
**daß** der Durchbruch (24b, 24c) im Katalysatorelement (8) für eine Verbindung mit dem Wärmerohr (7) außermittig angeordnet ist.

7. Vorrichtung nach Anspruch 5 oder 6,
**dadurch gekennzeichnet,**
**daß** das Katalysatorelement(8) an der Anströmseite im wesentlichen gleich lange Wärmeleitwege bis zum Durchbruch (24a, 24b, 24c) aufweist.

8. Vorrichtung nach Anspruch 7,
**dadurch gekennzeichnet,**
**daß** die Kontur des Katalysatorelementes (8) an der Anströmseite im wesentlichen rund oder elliptisch ausgebildet ist.

9. Vorrichtung nach einem der Ansprüche 1 bis 8,
**dadurch gekennzeichnet,**
**daß** das Katalysatorelement (8) und zumindest teilweise der erste Abschnitt (7a) des Wärmerohres (7) in einem Gehäuse (6) angeordnet sind.

## Claims

1. Device for recombination of hydrogen
- with at least one catalytic converter element (8),
- with at least one heat exchanger tube (7) carrying a working substance (11) and connected thermoconductively with the catalytic converter element (8) and
- with a cooler (14) connected to the heat exchanger tube (7) for cooling the coolant (11),
**characterised in that**
- a first section (7a) of the heat exchanger tube (7) is filled with liquid coolant (11),
- that the first section (7a) is connected with the catalytic converter element (8), that a second section (7b) of the heat exchanger tube (7) is filled with a vapour cushion (12) which has a vaporous working substance (11) and
- that the cooler (14) is disposed in the second section (7b).

2. Device according to claim 1,
**characterised in that**
the working pressure in the second section (7b) has a specified value.

3. Device according to claim 1 or 2,
**characterised in that**
- the working substance (11)
is water, heating oil or metal.

4. Device according to one of claims 1 to 3,
**characterised in that**
on the supply side and on the return side, the heat exchanger tube (7) is connected to the catalytic converter element (8).

5. Device according to one of claims 1 to 4,
**characterised in that**
the gap (24a) in the catalytic converter element (8) for a connection with the heat exchanger tube (7) is disposed centrally.

6. Device according to one of claims 1 to 4,
**characterised in that**
the gap (24b, 24c) in the catalytic converter element (8) for a connection with the heat exchanger tube (7) is disposed off-centre.

7. Device according to one of claims 5 or 6,
**characterised in that**
the catalytic converter element (8) has heat conduction paths of essentially equal length as far as the gap (24a, 24b, 24c) on the inflow side.

8. Device according to claim 7,
**characterised in that**
the contour of the catalytic converter element (8) on the inflow site is essentially round or elliptical in shape.

9. Device according to one of claims 1 to 8,
**characterised in that**
the catalytic converter element (8) and at least part of the first section (7a) of the heat exchanger tube (7) are disposed inside a housing.

## Revendications

1. Dispositif de recombinaison de l'hydrogène,
- comportant au moins un élément catalyseur (8),
- comportant au moins un tube échangeur de chaleur (7) guidant une substance active (11), et relié de manière thermoconductrice à l'élément catalyseur (8), et
- comportant un refroidisseur (14) relié au tube échangeur de chaleur (7), permettant de refroidir l'agent réfrigérant (11),
**caractérisé en ce que**
- un premier tronçon (7a) du tube échangeur de chaleur (7) est rempli d'agent réfrigérant (11) liquide,
- le premier tronçon (7a) est relié à l'élément catalyseur (8),
- un deuxième tronçon (7b) du tube échangeur de chaleur (7) est rempli d'une couche de vapeur protectrice (12) présentant une substance active (11) sous forme de vapeur, et
- le refroidisseur (14) est disposé dans le deuxième tronçon (7b).

2. Dispositif selon la revendication 1, **caractérisé en ce que** la pression de service dans le deuxième tronçon (7b) a une valeur prédéfinie.

3. Dispositif selon l'une quelconque des revendications 1 ou 2, **caractérisé en ce que** la substance active (11) est de l'eau, de l'huile caloporteuse ou du métal.

4. Dispositif selon l'une quelconque des revendications 1 à 3, **caractérisé en ce que** le tube échangeur de chaleur (7) est relié du côté de l'arrivée, et le côté de retour du premier tronçon (7a) est relié à l'élément catalyseur (8).

5. Dispositif selon l'une quelconque des revendications 1 à 4, **caractérisé en ce que** l'ajour (24a) dans l'élément catalyseur (8), permettant de relier le tube échangeur de chaleur (7), est disposée au centre.

6. Dispositif selon l'une quelconque des revendications 1 à 4, **caractérisé en ce que** l'ajour (24b, 24c) dans l'élément catalyseur (8), permettant de relier le tube échangeur de chaleur (7), est disposée en dehors du centre.

7. Dispositif selon l'une quelconque des revendications 5 ou 6, **caractérisé en ce que** l'élément catalyseur (8), du côté de l'afflux, présente une voie de conduction thermique de longueur sensiblement identique jusqu'à l'ajour (24a, 24b, 24c).

8. Dispositif selon la revendication 7, **caractérisé en ce que** le contour de l'élément catalyseur (8) est configuré de manière sensiblement arrondie ou elliptique du côté de l'afflux.

9. Dispositif selon l'une quelconque des revendications 1 à 8, **caractérisé en ce que** l'élément catalyseur (8) et au moins en partie le premier tronçon (7a) du tube échangeur de chaleur (7) sont disposés dans un boîtier (6).
